# EUROPEAN PATENT APPLICATION

(11) **EP 2 711 755 A2**
(43) Date of publication of application: **26.03.2014**
(21) Application number: 13185502.5
(22) Date of filing: 23.09.2013
(51) Int. Cl.: G02B 6/44, G02B 6/46

(54) **Optical cable management device for an optical cable distribution device**

(30) Priority: 25.09.2012 DE 202012009178 U
(71) Applicant: CCS Technology, Inc., Wilmington, DE 19803 (US)
(72) Inventor: Gralewski-Sek, Grzegorz Konrad, 91-849 Lodz (PL); Kaluzynski, Janusz Krzysztof, 93-192 Lodz (PL); Latocha, Remigiusz, 92-437 Lodz (PL); Wroblewski, Michal, 99-300 Kutno (PL)
(74) Representative: Sturm, Christoph

(57) **Abstract**

An optical cable management device (10) for an optical cable distribution device, having a housing (11), it being possible for the housing (11) to be fitted to a support structure of an optical cable distribution device, and having a receptacle (12) for optical cable connections that is pivotably fastened to the housing (11), and a first side (20) of the receptacle (12) and a first side wall (13) of the housing (11) adjoining the first side (20) of the receptacle (12), and a second side (21) of the receptacle (12) and a second side wall (14) of the housing (11) adjoining the second side (21) of the receptacle (12), each have interacting upper recesses (22, 24) and lower recesses (23, 25).

## Description

This application claims the benefit of priority to German Utility Model Application No. 202012009178.6 filed September 25, 2012, the content of which is relied upon and incorporated herein by reference in its entirety.

The disclosure relates to an optical cable management device for an optical cable distribution device according to the pre-characterizing clause of Claim 1.

Optical cables need to be connected together when constructing data transmission networks from optical cables. Such connection points must be managed within optical cable distribution devices both outside and inside buildings. Outside buildings, connection points between optical cables are typically accommodated within optical cable distribution devices designed as cable sleeves or street cabinets. Inside buildings, connection points between optical cables are typically managed within optical cable distribution devices designed as distribution boxes or distribution racks. Optical cable distribution devices designed as wall-mounted distributors can be used both outside and inside buildings.

Optical cable distribution devices possess a support structure to which multiple optical cable management devices can be fastened. Optical cable management devices can thus be fastened inside optical cable distribution devices designed as distribution boxes or distribution racks or wall-mounted distributors, on a frame or rack of the respective optical cable distribution device. Optical cable management devices that are fastened to a support structure of an optical cable distribution device typically possess a housing, it being possible for the optical cable management device to be fitted to the support structure of an optical cable distribution device via the housing.

Optical cable management devices known from the prior art also possess a receptacle for optical cable connections that is pivotably fastened to the housing of the optical cable management device, this receptacle preferably serving for the management of patch connections and/or splice connections between optical cables. The ability of the receptacle for the optical cable connections to pivot relative to the housing is important in order to achieve good access to the optical cable connections and at the same time high packing densities.

Optical cable management devices known from the prior art cannot be adapted flexibly to different installation situations. It is thus, for example, necessary to provide different optical cable management devices for different pivoting directions of the receptacle relative to the housing. This is a disadvantage.

Starting from this point, a novel optical cable management device for an optical cable distribution device is provided.

This problem is solved by an optical cable management device according to Claim 1. A first side of the receptacle and a first side wall of the housing adjoining the first side of the receptacle, and a second side of the receptacle and a second side wall of the housing adjoining the second side of the receptacle each have interacting upper recesses and lower recesses, wherein bearing elements forming an axis of rotation are interchangeably inserted variably either into the interacting upper recesses and lower recesses of the first side of the receptacle and of the adjoining first side wall of the housing or alternatively into the interacting upper recesses and lower recesses of the second side of the receptacle and the adjoining side wall of the housing, in order to pivot the receptacle relative to the housing.

The optical cable management device can be adapted flexibly to different installation situations. Thus the bearing elements that ensure the pivotability of the receptacle relative to the housing of the optical cable management device can be used interchangeably variably either on the first side of the receptacle or on the second side of the receptacle in order to ensure either pivotability of the receptacle relative to the housing about an axis of pivoting that extends in the region of the first side or about an axis of pivoting that extends in the region of the second side. This variable adaptability is ensured by the symmetry of the recesses in the region of the opposing sides of the receptacle and the opposing side walls of the housing. The bearing elements can be repositioned without difficulty in the field in order to adapt individually the pivoting direction of the receptacle of the optical cable management device relative to the housing of the same.

According to an advantageous development, a fixing element is associated interchangeably variably with at least one of the interacting upper recesses and lower recesses of the first side of the receptacle and of the adjoining first side wall of the housing, or alternatively with at least one of the interacting upper recesses and lower recesses of the second side of the receptacle and of the adjoining second side wall of the housing, in order to fix the receptacle on the housing in a position pivoted inside the housing. When the bearing elements are associated with the interacting upper recesses and lower recesses of the first side of the receptacle and of the adjoining first side wall of the housing, the or each fixing element is associated with the interacting upper recesses and lower recesses of the second side of the receptacle and of the adjoining second side wall of the housing. When the bearing elements are associated with the interacting upper recesses and lower recesses of the second side of the receptacle and of the adjoining second side wall of the housing, the or each fixing element is associated with the interacting upper recesses and lower recesses of the first side of the receptacle and of the adjoining first side wall of the housing.

This development has the advantage that fixing elements are also variably interchangeable. Thus, when in a position pivoted inside the housing, the receptacle can be securely fixed to the housing in order to prevent undesired pivoting of the receptacle relative to the housing.

Each bearing element is preferably formed from a nut having an internal screwthread, from a screw that has an external screwthread and projects into the nut interacting with said screw, and from a spacer. Each fixing element is formed from a spring plunger that is inserted into the respective recess of the respective side of the receptacle and can be latched into the respective recess of the respective side wall of the housing. This design of the bearing elements and fixing elements is particularly simple from a structural point of view and therefore preferred.

According to an advantageous development, the receptacle for optical cable connections has a bottom wall, a front wall in the form of a patch panel, and a rear wall in the form of a splice tray holder. The splice trays can be fitted to the rear wall of the receptacle in such a way that a complete stack of splice trays can be displaced in translation relative to the bottom wall towards the first side wall of the housing and conversely towards the second side wall of the housing, in order to prevent a collision of the stack of splice trays with the housing when the receptacle pivots relative to the housing. This ability of a stack of splice trays to be displaced in translation relative to the rear wall of the receptacle enables high packing densities to be ensured and the receptacle to pivot unobstructed relative to the housing.

Preferred embodiments can be found in the dependent claims and the subsequent description. Exemplary embodiments are explained in detail, with no limitation being implied, with the aid of the drawings, in which:
Figure 1 shows a perspective front view of an optical cable management device for an optical cable distribution device;
Figure 2 shows a detail of the optical cable management device in Figure 1;
Figure 3 shows a further detail of the optical cable management device in Figure 1;
Figure 4 shows a further detail of the optical cable management device in Figure 1;
Figure 5 shows a perspective rear view of the optical cable management device together with splice trays accommodated in said device; and
Figure 6 shows a detail of the view in Figure 5.

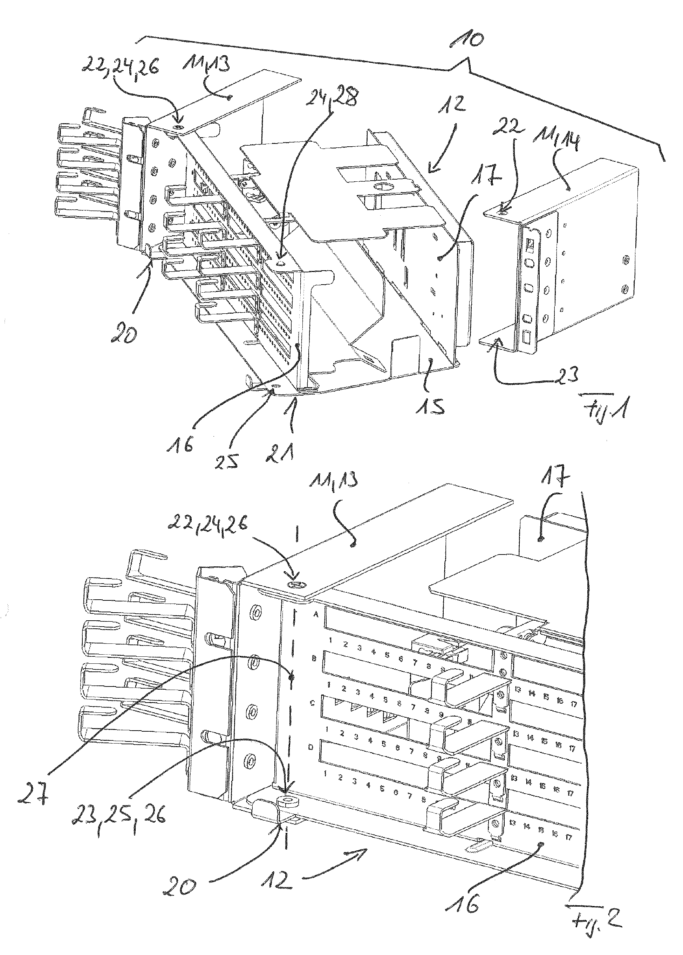

Figure 1 shows a perspective view of an optical cable management device 10 that comprises a housing 11 and a receptacle 12 fastened pivotably in the housing 11.

In the exemplary embodiment shown, the housing 11 is formed from two side walls 13, 14 with a U-shaped contour in cross-section, via which the optical cable management device 10 can be fastened to a support structure such as a frame or a rack of an optical cable distribution device. The housing 11 is thus preferably fitted rigidly to the support structure of the optical cable distribution device 10.

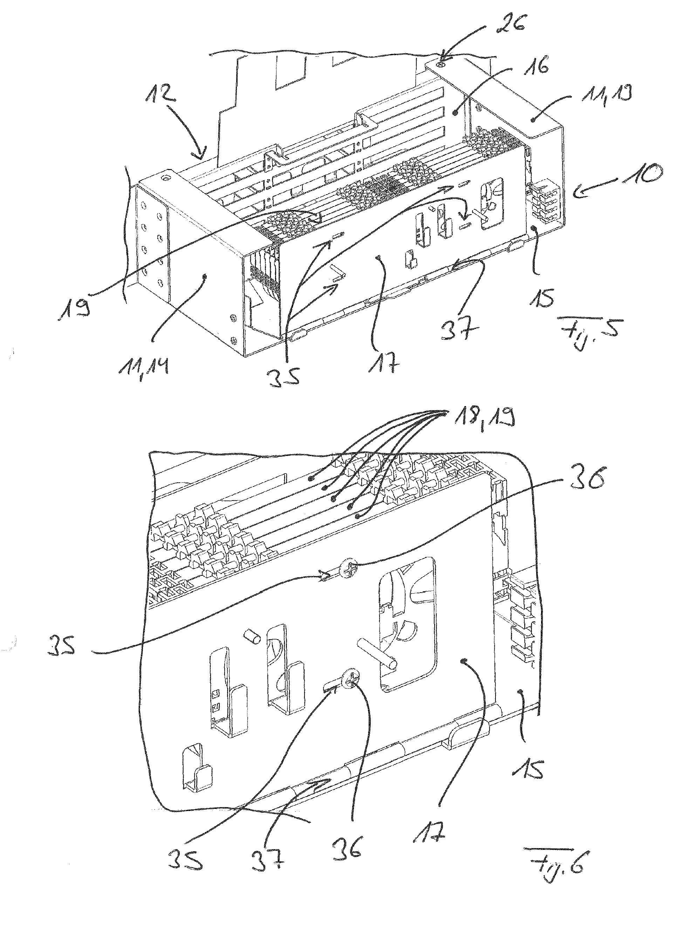

The receptacle 12 of the optical cable management device 10, which is fastened pivotably to the housing 11 of the said device, has in the exemplary embodiment shown a bottom wall 15, a front wall 16 in the form of a patch panel and a rear wall 17 in the form of a splice tray holder. As can be seen in Figures 5 and 6, splice trays 18 can be fitted on the rear wall 17 of the receptacle 12, namely in the form of a stack 19 of splice trays consisting of splice trays 18 positioned above or next to one another.

Interacting upper recesses 22, 23 and lower recesses 24, 25 are in each case formed on a first side 20 of the receptacle 12 and on the first side wall 13 of the housing 11 adjoining the first side 20 of the receptacle 12, as well as on a second side 21 of the receptacle 12 and on the second side wall 14 of the housing 11 adjoining the second side 21 of the receptacle 12. Accordingly, the two side walls 13 and 14 of the housing 11 together have four recesses, namely two upper recesses 22 and two lower recesses 23. The receptacle 12 likewise has four corresponding recesses, namely two upper recesses 24 and two lower recesses 25 in each case on the opposing sides 20, 21 of said receptacle.

In order now to ensure variable pivotability of the receptacle 12 relative to the housing of the optical cable management device 10, bearing elements 26, which together form an axis of rotation 27 about which the receptacle 12 can pivot relative to the housing 10, are inserted interchangeably variably either into the interacting upper and lower recesses 22, 24, 23, 25 of the first side 20 of the receptacle 12 and of the adjoining first side wall 13 of the housing 11, or alternatively into the interacting upper and lower recesses 22, 24 and 23, 25 of the second side 21 of the receptacle 12 and of the adjoining second side wall 14 of the housing 11.

In the exemplary embodiment of Figure 1, these bearing elements 26 are inserted into the recesses 22, 24 and 23, 25 on the first side 20 of the receptacle 12 and of the first side wall 13 of the housing 11 such that accordingly the receptacle 12 can pivot about the axis of rotation 27 in the region of the first side 20 of the receptacle relative to the housing 11. Simply by displacing these bearing elements into the recesses 22, 24 and 23, 25 on the opposing second side 21 of the receptacle 12 or on the opposing second side wall 14 of the housing 11, the receptacle 12 can alternatively also be pivoted relative to the housing 11 about an axis of rotation that then extends in the region of the second side 21 of the receptacle 12.

This repositioning of the bearing elements 26 between the two sides 20, 21 of the receptacle 12 and the opposing side walls 13, 14 of the housing 11 can be easily performed in the field by a fitter using a screwdriver.

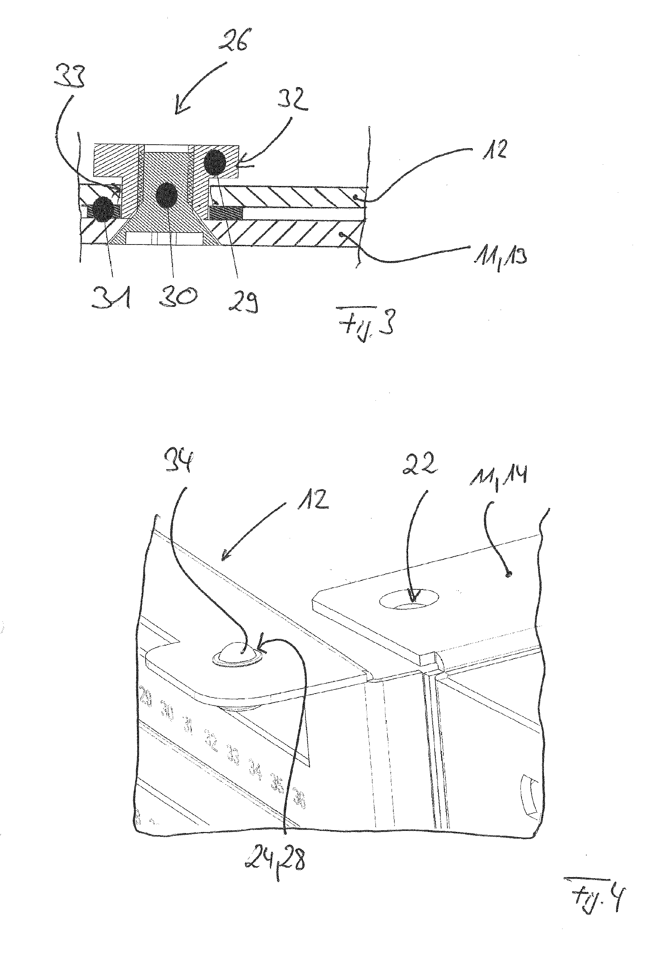

In the exemplary embodiment shown in Figure 1, a fixing element 28 is inserted into the upper recess 24 on the second side 21 of the receptacle 12. Such a fixing element 28 can also be inserted into the lower recess 25 on the second side 21 of the receptacle 12. When the receptacle 12 is pivoted into the housing 11, this fixing element 28 latches into the corresponding recess 22 (see in particular Figure 4) on the second side wall 14 of the housing 11 in order to thus fix the receptacle 12 on the housing 11 in the position pivoted into the housing 11.

In the same way as the bearing elements 26, the or each fixing element 28 is accordingly associated interchangeably variably with the corresponding interacting recesses 22, 24 and/or 23, 25 of the receptacle 12 and the housing 11. When, as in the exemplary embodiment shown, the bearing elements 26 are inserted into the interacting upper recesses 22, 24 and the interacting lower recesses 23, 25 of the first side 20 of the receptacle 12 and of the adjoining first side wall 13 of the housing 11, the or each fixing element is associated with the interacting upper recesses 22, 24 and/or the interacting lower recesses 23, 25 of the second side 21 of the receptacle 12 and of the adjoining second side wall 14 of the housing 11. In contrast, however, when the bearing elements 26 are inserted into the interacting upper recesses 22, 24 and into the interacting lower recesses 23, 25 of the second side 21 of the receptacle 12 and of the adjoining second side wall 14 of the housing 11, the or each fixing element is associated with the interacting upper recesses 22, 24 and/or the interacting lower recesses 23, 25 of the first side 20 of the receptacle 12 and of the adjoining first side wall 13 of the housing 11.

Each of the bearing elements 26 that are positioned along the axis of rotation 27 and define the latter is, according to Figure 3, formed by a nut 29 having an internal screwthread, a screw 30 having an external screwthread, and a spacer 31.

The nut 29 having the internal screwthread possesses two portions 32, 33 with different diameters, the portion 33 of the nut 29 with the smaller diameter projecting into the respective recess 24 or 25 of the receptacle 12 and extending through this recess 24 or 25, and likewise through a corresponding recess of the spacer 31.

The screw 30 having the external screwthread projects with its external screwthread into the nut 29 in such a way that the internal screwthread of the nut 29 and the external screwthread of the screw 30 interact. A portion of the screw 30 that adjoins the external screwthread and has a conical contour is accommodated in the corresponding recess 22 or 23 of the respective side wall of the housing 11, the respective recess 22, 23 likewise having a conical contour.

The spacer 31 is positioned between the receptacle 12 and the respective side wall 13 or 14 of the housing 11 and is preferably manufactured from Teflon. Such a Teflon spacer ensures that the receptacle 12 can pivot easily and without any wear relative to the housing 11.

The or each fixing element 28 is designed as a spring plunger that has a ball 34 that is loaded (in a way that cannot be seen) by a spring element. When the receptacle 12 is pivoted into the housing 11, the ball 34 of the spring plunger is first pressed inwards counter to the spring force of the spring element, the ball 34 then latching into the corresponding recess 22 or 23 of the respective side wall 13 or 14 of the housing 11, in order thus to fix the receptacle 12 in locking fashion on the housing 11 in the position pivoted into the housing 11.

A further particularity of the optical cable management device 10 consists in the splice trays 18 of the stack 19 of splice trays being fitted on the bottom wall 15 of the receptacle 12 in such a way that the complete stack 19 of splice trays can be displaced in translation relative to the bottom wall 15 of the receptacle 12 towards the first side wall 13 of the housing and, conversely, towards the second side wall 14 of the housing 11, in order to prevent the stack 19 of splice trays from colliding with the housing 11 when the receptacle 12 is pivoted relative to the housing 11 about the axis of pivoting 27.

In order to ensure the ability of the stack 19 of splice trays to be displaced in translation relative to the bottom wall 15, the stack 19 of splice trays is fastened to the bottom wall 15 via screws 36 guided in slots 35 of the bottom wall 15. Once the screws 36 have been slackened, the stack 19 of splice trays can be displaced in translation to the left or right relative to the bottom wall 15, the length of the slots 35 limiting this ability to be displaced in translation.

The rear wall 17 of the receptacle 12 on which the stack 19 of splice trays is fastened can moreover be pivoted relative to the bottom wall 15 of the receptacle 12, namely about an axis of pivoting 37. This pivotability is ensured both in the position of the receptacle 12 pivoted into the housing 11 and in the position of the receptacle 12 pivoted out of the housing 11, as a result of which it is ensured that the individual splice trays 18 of the stack 19 of splice trays are readily accessible in particular in the position of the receptacle 12 pivoted out of the housing 11.

### List of reference numerals

- 10: optical cable management device
- 11: housing
- 12: receptacle
- 13: first side wall of the housing
- 14: second side wall of the housing
- 15: bottom wall
- 16: front wall
- 17: rear wall
- 18: splice tray
- 19: stack of splice trays
- 20: first side of the receptacle
- 21: second side of the receptacle
- 22: upper recess of the housing
- 23: lower recess of the housing
- 24: upper recess of the receptacle
- 25: lower recess of the receptacle
- 26: bearing element
- 27: axis of pivoting
- 28: fixing element
- 29: nut
- 30: screw
- 31: spacer
- 32: portion
- 33: portion
- 34: ball
- 35: slot
- 36: screw
- 37: axis of pivoting

## Claims

1. Optical cable management device (10) for an optical cable distribution device, having a housing (11), it being possible for the housing (11) to be fitted to a support structure of an optical cable distribution device, and having a receptacle (12) for optical cable connections that is pivotably fastened to the housing (11), **characterized in that** a first side (20) of the receptacle (12) and a first side wall (13) of the housing (11) adjoining the first side (20) of the receptacle (12), and a second side (21) of the receptacle (12) and a second side wall (14) of the housing (11) adjoining the second side (21) of the receptacle (12), each have interacting upper recesses (22, 24) and lower recesses (23, 25), wherein bearing elements (26) forming an axis of rotation (27) are interchangeably inserted variably either into the interacting upper recesses (22, 24) and lower recesses (23, 25) of the first side (20) of the receptacle (12) and the adjoining first side wall (13) of the housing (11) or alternatively into the interacting upper recesses (22, 24) and lower recesses (23, 25) of the second side (21) of the receptacle (12) and of the adjoining side wall (14) of the housing (11), in order to pivot the receptacle (12) relative to the housing (11).

2. Optical cable management device according to Claim 1, **characterized in that** a fixing element (28) is associated interchangeably variably either with at least one of the interacting upper recesses (22, 24) and lower recesses (23, 25) of the second side (21) of the receptacle (12) and of the adjoining second side wall (14) of the housing (11), or alternatively with at least one of the interacting upper recesses (22, 24) and lower recesses (23, 25) of the first side (20) of the receptacle (12) and the adjoining first side wall (13) of the housing (11), in order to fix the receptacle (12) on the housing (11) in a position pivoted inside the housing (11).

3. Optical cable management device according to Claim 2, **characterized in that** when the bearing elements (26) are associated with the interacting upper recesses (22, 24) and lower recesses (23, 25) of the first side (20) of the receptacle (12) and of the adjoining first side wall (13) of the housing (11), the or each fixing element (28) is associated with the interacting upper recesses (22, 24) and lower recesses (23, 25) of the second side (21) of the receptacle (12) and of the adjoining second side wall (14) of the housing (11).

4. Optical cable management device according to Claim 2, **characterized in that** when the bearing elements (24) are associated with the interacting upper recesses (22, 24) and lower recesses (23, 25) of the second side (21) of the receptacle (12) and of the adjoining second side wall (14) of the housing (11), the or each fixing element (28) is associated with the interacting upper recesses (22, 24) and lower recesses (23, 25) of the first side (20) of the receptacle (12) and of the adjoining first side wall (13) of the housing (11).

5. Optical cable management device according to one of Claims 1 to 4, **characterized in that** each bearing element (26) is formed from a nut (29) having an internal screwthread, from a screw (30) that has an external screwthread and projects into the nut interacting with said screw, and from a spacer (31).

6. Optical cable management device according to Claim 5, **characterized in that** the nut (29) is inserted into the respective recess of the respective side of the receptacle (12), **in that** the screw (30) is inserted into the respective recess of the respective side wall of the housing (11), and **in that** the spacer (31) is positioned between the receptacle (12) and the side wall of the housing (11).

7. Optical cable management device according to one of Claims 1 to 6, **characterized in that** each fixing element (28) is formed from a spring plunger that is inserted into the respective recess of the respective side of the receptacle (12) and can be latched into the respective recess of the respective side wall of the housing (11).

8. Optical cable management device according to one of Claims 1 to 7, **characterized in that** the receptacle (12) for optical cable connections has a bottom wall (15), a front wall (16) in the form of a patch panel, and a rear wall (17) in the form of a splice tray holder.

9. Optical cable management device according to Claim 8, **characterized in that** the splice trays (18) can be fitted to the rear wall (17) of the receptacle (12) in such a way that a stack (19) of splice trays can be displaced in translation relative to the bottom wall (17) towards the first side wall (13) of the housing (11) and conversely towards the second side wall (14) of the housing (11), in order to prevent a collision of the stack (19) of splice trays with the housing (11) when the receptacle (12) pivots relative to the housing (11).

10. Optical cable management device according to Claim 8 or 9, **characterized in that** the rear wall (17) of the receptacle (12) can pivot relative to the bottom wall (15) of the receptacle (12) together with splice trays (18) fitted to the rear wall (17).
